# EUROPÄISCHE PATENTSCHRIFT

(11) **EP 0 922 563 B1**
(45) Veröffentlichungstag und Bekanntmachung des Hinweises auf die Patenterteilung: **28.04.2004**
(21) Anmeldenummer: 98120819.2
(22) Anmeldetag: 03.11.1998
(51) Int. Cl.: B32B 7/12, B32B 31/00, B60R 13/08, E04F 13/08

(54) **Verfahren zur Herstellung von Akustik-Bauteilen**
Method of making sound dampening elements
Procédé pour fabriquer des éléments pour l'atténuation de son

(30) Priorität: 12.12.1997 DE 19755320
(43) Veröffentlichungstag der Anmeldung: 16.06.1999
(73) Patentinhaber: BASF AKTIENGESELLSCHAFT, 67056 Ludwigshafen (DE)
(72) Erfinder: Thom, Arnd, 55232 Alzey (DE)

(56) Entgegenhaltungen:
- EP-A- 0 253 221
- EP-A- 0 490 389
- EP-A- 0 672 524
- DE-A- 2 307 590
- DE-A- 4 138 877
- GB-A- 1 519 626
- US-A- 4 540 717
- US-A- 4 966 799

## Beschreibung

Die Erfindung betrifft ein Verfahren zur Herstellung von Akustikbauteilen, bei dem man Platten aus einem offenzelligen Melaminharz-Schaumstoff beidseitig mit dünnen, reißfesten Deckschichten kaschiert.

Es ist bekannt, daß offenzellige Schaumstoffe, z.B. solche auf Basis von Melaminharzen, hervorragende schallabsorbierende Eigenschaften haben (siehe z.B. Kunststoffe 75, Heft 11 (1985), Seiten 843 bis 848). Aus entsprechenden Schaumstoffplatten kann man durch Kaschieren mit festen Deckschichten dimensionsstabile Akustik-Bauteile herstellen.

Solche Bauteile wurden bisher in einem aufwendigen Verfahren dadurch hergestellt, daß man auf die offenzellige Schaumstoffplatte eine wäßrige Bindemittelsuspension aufbrachte, darauf die Deckschichten auflegte und den Verbund bei Temperaturen von 50 bis 250°C verpreßte, wobei das Bindemittel aushärtete (EP-A 672 524).

Der Erfindung lag nun die Aufgabe zugrunde, dieses langwierige und aufwendige Verfahren zu vereinfachen.

Es wurde nun gefunden, daß man dimensionsstabile Akustik-Bauteile auch ohne Anwendung wäßriger Suspensionen dadurch herstellen kann, daß man beidseitig auf die Oberfläche von offenzelligen Melaminharz-Schaumstoffplatten dünne, hochfeste Deckschichten, die einseitig mit einem Kleber versehen sind, auflegt und den Verbund bei Temperaturen von 80 bis 250°C und Drücken von 2 bis 200 bar verpreßt.

Als Ausgangsmaterialien für die Schaumstoffplatten kommen Melamin/Formaldehyd-Kondensationsprodukte in Frage. Besonders bevorzugt sind elastische Schaumstoffe auf Basis von Melaminharzen, wie sie z.B. in US-A-4,540,717 beschrieben sind. Die Schaumstoffplatten haben im allgemeinen ein spezifisches Gewicht von 5 bis 100 g/l, insbesondere von 8 bis 20 g/l und eine Dicke von 5 bis 100 mm, vorzugsweise von 10 bis 50 mm.

Geeignete Deckschichten sind Faservliese auf Basis von Mineral-, Kunststoff-, Zellstoff- oder Baumwoll-Fasern, mit einer Schichtdicke von 0,05 bis 3 mm. Die Deckschichten sind einseitig mit einem Kleber aus duroplastischen Harzen beschichtet. Faservliese haben den Vorteil, daß sie schalltransparent sind.

Geeignete Kleber sind handelsübliche Melaminharzkleber, wie KAURAMIN der BASF AG, Acrylesterharze, wie ACRONAL der BASF und Polyvinylpropionatharz, wie PROPIOFAN der BASF. Sie wurden in einem Vorfertigungsschritt vollflächig, streifenförmig oder punktförmig auf die Deckschicht aufgebracht. Der Kleber kann bei der Vorfertigung in flüssiger Form, als Schmelze, in Lösung oder als Dispersion aufgebracht worden sein; bei dem erfindungsgemäßen Verfahren liegt er aber im Verbund auf der Deckschicht als feste Substanz vor. Im Handel befinden sich Faservliese, die bereits einen Kleber aufgetragen enthalten, z.B. Zetabond G der Fa. Hof Textil. Der Kleberauftrag kann in weiten Grenzen zwischen 10 und 100 g·m⁻², vorzugsweise zwischen 20 und 60 g · m⁻² schwanken.

Bei dem erfindungsgemäßen Verfahren werden beidseitig die Deckschichten aufgelegt, und der Verbund wird bei Temperaturen von 80 bis 250°C, vorzugsweise von 100 bis 120°C und Drücken von 5 bis 200 bar, vorzugsweise von 10 bis 50 bar verpreßt. Die Preßzeit beträgt im allgemeinen 0,1 bis 10 min. Je nach Form der Pressen können ebene oder auch sphärische, z.B. gebogene Bauteile hergestellt werden.

Beim Verpressen erweichen die Kleber und dringen oberflächlich in die Poren des Schaumstoffs ein. Die duroplastischen Kleber härten dabei aus. Dadurch, daß ein Teil des Klebers in die Oberfläche des Schaumstoffs eingedrungen ist und sich dort verfestigt hat, bleiben die verpreßten Bauteile formstabil.

Die erfindungsgemäß hergestellten Bauteile weisen eine hohe Schallabsorption, eine gute Dimensionsstabilität und Temperaturbeständigkeit auf. Sie können als Akustik-Bauteile im Kraftfahrzeugbau, z.B. für Stirnwandverkleidungen, Motorraum-Isolierungen oder Getriebetunnelverkleidungen verwendet werden, ebenso für die Schalldämmung stationärer Maschinen sowie die Schalldämmung und -dämpfung in Gebäuden.

### Beispiele

Auf eine Melaminharz-Schaumstoffplatte (BASOTECT der BASF) mit den Abmessungen 200 x 200 x 30 mm wird beidseitig ein 0,4 mm dikkes Faservlies Zetabond G 2109/80 K3R bzw. ein 0,4 mm dickes Faservlies Zetabond G 2109/8 B2 R2 (Fa. Hof Textil) aufgelegt. Es handelt sich dabei um Vliese aus Polyesterfasern, die mit 40 g·m⁻² eines Melaminharzklebers (KAURAMIN 260 der BASF) vollflächig beschichtet sind.

Die Verbunde werden 2 min lang bei 210°C und 150 bar und einer Schließgeschwindigkeit von 200 mm · min⁻¹ verpreßt. Dabei werden dimensionsstabile Bauteile erhalten.

## Patentansprüche

1. Verfahren zur Herstellung von Akustik-Bauteilen, bei dem man Platten aus einem offenzelligen Melaminharz-Schaumstoff beidseitig mittels eines Klebers mit dünnen, reissfesten Deckschichten durch Verpressen bei Temperaturen zwischen 80 und 250°C und Drücken von 2 bis 200 bar kaschiert, **dadurch gekennzeichnet, daß** die beiden Deckschichten aus 0,1 bis 3 mm dicken Faservliesen bestehen, die einseitig mit einer Klebeschicht aus einem Melamin-, Acrylester- oder Polyvinylpropionat-Harz versehen sind, welche in einem Vorfertigungsschritt vollflächig, streifenförmig oder punktförmig mit einem Flächengewicht von 10 bis 100g/m² auf die Deckschichten aufgebracht wurde.

## Claims

1. A process for the production of acoustic components, in which boards of an open-cell melamine resin foam are laminated on both sides by means of an adhesive with thin, tear-resistant outer layers by pressing at from 80 to 250°C and pressures of from 2 to 200 bar, wherein the two outer layers comprise from 0.1 to 3 mm thick fiber webs which are provided on one side with an adhesive layer of a melamine, acrylic ester or polyvinyl propionate resin which has been applied to the outer layers over the entire area, in strips or pointwise in an amount of from 10 to 100 g/m² in a prefabrication step.

## Revendications

1. Procédé de préparation d'éléments acoustiques, dans lequel on stratifie des plaques en une mousse de résine mélamine à pores ouverts, sur les deux faces, à l'aide d'une colle, avec des couches de revêtement fines, résistant à la déchirure, par compression à des températures allant de 80 à 250°C et des pressions allant de 2 à 200 bar, **caractérisé en ce que** les deux couches de couverture consistent en des voiles en fibres de 0,1 à 3 mm d'épaisseur, qui sont munis sur une face, d'une couche de colle en une résine de mélamine, d'ester acrylate ou de poly(propionate de vinyle), qui est appliquée au cours d'une étape de préfinition, sur toute la surface, sous la forme de rubans ou de points, avec un poids surfacique allant de 10 à 100g/m² sur les couches de couverture.
